# EUROPEAN PATENT SPECIFICATION

(11) **EP 4 280 019 B1**
(45) Date of publication and mention of the grant of the patent: **09.12.2026**
(21) Application number: 21927581.5
(22) Date of filing: 29.10.2021
(51) Int. Cl.: G06E 3/00

(54) **OPTICAL COMPUTING APPARATUS, OPTICAL COMPUTING SYSTEM AND METHOD**
OPTISCHE BERECHNUNGSVORRICHTUNG, OPTISCHES BERECHNUNGSSYSTEM UND VERFAHREN
APPAREIL DE CALCUL OPTIQUE, SYSTÈME ET PROCÉDÉ DE CALCUL OPTIQUE

(30) Priority: 25.02.2021 CN 202110210105; 10.05.2021 CN 202110506330
(43) Date of publication of application: 22.11.2023
(73) Proprietor: Huawei Technologies Co., Ltd., Shenzhen, Guangdong 518129 (CN)
(72) Inventor: HE, Jianjun, Hangzhou, Zhejiang 310058 (CN); LIU, Biaohan, Hangzhou, Zhejiang 310058 (CN); LI, Chong, Shenzhen, Guangdong 518129 (CN); CHU, Yayan, Shenzhen, Guangdong 518129 (CN)
(74) Representative: Epping - Hermann - Fischer
(86) International application number: PCT/CN2021/127627
(87) International publication number: WO 2022/179157

(56) References cited:
- EP-A1- 4 006 690
- WO-A1-2021/013221
- CN-A- 106 444 012
- CN-A- 112 041 857
- CN-A- 112 306 145
- US-A1- 2018 107 237
- BARTLETT TERRY A ET AL: "Adapting Texas Instruments DLP technology to demonstrate a phase spatial light modulator", SPIE PROCEEDINGS; [PROCEEDINGS OF SPIE ISSN 0277-786X], SPIE, US, vol. 10932, 4 March 2019 (2019-03-04), pages 109320S - 109320S, XP060119723, ISBN: 978-1-5106-3673-6, DOI: 10.1117/12.2514483

## Description

### TECHNICAL FIELD

This application relates to the field of optical communication technologies, and in particular, to an optical computing apparatus, and an optical computing method.

### BACKGROUND

Optical computing is a manner of simulating a data operation by using an optical signal loaded with data. The optical computing is widely used due to advantages such as a high speed, a large capacity, space transmission, and antielectromagnetic interference.

An optical 4F system is the most representative in the field of optical computing, where 4F is four times a focal length. In the optical 4F system, a beam of coherent light loaded with data is projected onto an ideal lens L1, and an optical field distribution of a back focal plane P2 of the ideal lens L1 is theoretically exactly a result of Fourier transform of an optical field distribution of a front focal plane P1. The light projected onto P2 continues to propagate, and passes through another ideal lens L2, and Fourier transform is performed once on the light. Theoretically, an optical field distribution of a back focal plane P3 of the ideal lens L2 is exactly a result of Fourier transform of an optical field distribution of a front focal plane of the ideal lens L2.

To implement a convolution operation on the optical 4F system, data F(B) obtained after Fourier transform may be modulated to P2, so that the optical field distribution of the back focal plane P3 of the ideal lens L2 may indicate a computing result of the convolution operation. However, the foregoing manner is only a theoretical implementation, because the data F(B) is transform in a complex number domain, amplitude and phase modulation are involved at the same time. To implement Fourier transform, the optical field distribution of the back focal plane P2 of the ideal lens L1 needs to be expanded. At present, a common manner is to embed an optical 4F system with a similar structure in P2, to spatially expand the optical field distribution of the back focal plane P2 of the ideal lens L1 to two identical optical field distributions. Phase modulation is implemented on one of the two optical field distributions, and amplitude modulation is implemented on the other optical field distribution.

In this manner, the optical 4F system is expanded to an "8F" system, and a quantity of lenses is increased. An increase in the quantity of lenses increases difficulty in aligning an optical path of the entire system, and increases difficulty in constructing the optical system.

Document WO 2021/013221 A1 refers to an optical computing chip that includes a light source array, a first concave mirror, and a modulator array. The light source array is located on an objective focal plane of the first concave mirror. The modulator array is located on an image focal plane of the first concave mirror. The light source array generates a first optical signal based on first data. The first concave mirror outputs a first reflected optical signal based on the first optical signal. The modulator array receives the first reflected optical signal, obtains first spectrum plane distribution data based on the first reflected optical signal, and modulates the first spectrum plane distribution data onto the modulator array.

Document Terry A. Bartlett et al., "Adapting Texas Instruments (TI) DLP® technology to demonstrate a phase spatial light modulator" in Proc. of SPIE, Vol. 10932, 2019, pages 1 to 19, refers to a prototype of a Phase Spatial Light Modulator (PLM) device that has been developed and demonstrated using DLP Micro-ElectroMechanical System (MEMS) based technology. Designed for a visible (405nm to 632nm) laser, this device uses an array of individuallyaddressable, digitally-controlled PLM micromirrors that can be addressed to multiple discrete vertical positions. The MEMS superstructure process flow used for DMD micromirrors was adapted to enable manufacturing this device on top of an existing DLP technology CMOS device. The prototype has demonstrated good uniformity across the array and the ability to steer light using phase light modulation.

### SUMMARY

This application provides an optical computing apparatus, and an optical computing method, to provide a simple optical computing apparatus that can implement a convolution operation. The present invention is defined by the attached set of claims.

According to a first aspect, an embodiment of this application provides an optical computing apparatus. The optical computing apparatus includes two lenses and a modulation unit. The modulation unit is located between the two lenses. The modulation unit is located on a back focal plane of a previous lens. For ease of description, the two lenses are respectively a first lens and a second lens.

The first lens receives a first group of optical signals loaded with first data (for example, data A), and outputs a second group of optical signals based on the first group of optical signals. The second group of optical signals is a group of optical signals obtained after Fourier transform is performed on the first group of optical signals.

The modulation unit is located on a back focal plane of the first lens and receives the second group of optical signals. The modulation unit performs amplitude modulation and phase modulation on the second group of optical signals based on second data (for example, data B), and outputs a plurality of groups of intermediate optical signals, where each group of intermediate optical signals includes a plurality of optical signals.

The second lens is located behind the modulation unit, receives the plurality of groups of intermediate optical signals, and outputs a third group of optical signals based on the plurality of groups of intermediate optical signals, where the third group of optical signals is a group of optical signals obtained after Fourier transform is performed on the plurality of groups of intermediate optical signals. The third group of optical signals indicates a computing result of the first data and the second data, for example, may indicate a computing result obtained after convolution operations are performed on the first data and the second data.

According to the optical computing apparatus, when the optical computing apparatus includes only two lenses, operations (for example, the convolution operations) of the first data and the second data may be simulated, to obtain the computing result of the first data and the second data. A quantity of lenses is small, and optical path alignment is easy to be implemented, effectively reducing difficulty in constructing the optical computing apparatus.

A group of intermediate optical signals is output after the amplitude modulation and the phase modulation are performed on an optical signal in the second group of optical signals. The modulation unit includes a phase plate and an amplitude modulation array, and the modulation unit is constructed in two different manners:
In a first manner, the phase plate is located before the amplitude modulation array, and the phase plate receives the second group of optical signals.

In this manner, after receiving the second group of optical signals, the phase plate may decompose the second group of optical signals into a plurality of groups of optical signals, where each group of optical signals includes a plurality of optical signals with different phases, amplitudes of the plurality of optical signals with different phases are the same, and an optical signal in the second group of optical signals is decomposed into a group of optical signals by the phase plate. The plurality of groups of optical signals continue to propagate to reach the amplitude modulation array. After receiving the plurality of groups of optical signals, the amplitude modulation array adjusts amplitudes of the plurality of groups of optical signals based on the second data, and outputs the plurality of groups of intermediate optical signals.

In a second manner, the amplitude modulation array is located before the phase plate, and the amplitude modulation array receives the second group of optical signals.

In this manner, after receiving the second group of optical signals, the amplitude modulation array may adjust an amplitude of the second group of optical signals based on the second data, and output a plurality of groups of optical signals, where each group of optical signals includes a plurality of optical signals, and phases of the plurality of optical signals are the same. An optical signal in the second group of optical signals outputs a group of optical signals by using the amplitude modulation array. It should be noted herein that the plurality of groups of optical signals in the second manner and the plurality of groups of optical signals in the first manner are different optical signals. The plurality of groups of optical signals continue to propagate to reach the phase plate.

The phase plate adjusts phases of the plurality of groups of optical signals, and outputs the plurality of groups of intermediate optical signals.

According to the optical computing apparatus, the modulation unit includes the phase plate and the amplitude modulation array. The phase plate has a simple structure and low costs, which can effectively reduce costs of the modulation unit and reduce difficulty in constructing the optical computing apparatus. In addition, the construction manner of the modulation unit is flexible and diversified, and is applicable to different scenarios. In addition, according to the optical computing apparatus provided in this embodiment of the present invention, the modulation unit including the phase plate and an amplitude modulator is used on a spectral plane of the first lens, so that the phase plate and the amplitude modulator can use a same resolution, and pixels of the phase plate and the amplitude modulator are aligned one by one. This can improve the resolution.

In a possible implementation, the optical computing apparatus further includes an optical detector, and the optical detector is located on a back focal plane of the second lens. The optical detector can receive the third group of optical signals on the back focal plane of the second lens, perform detection on the third group of optical signals, convert the third group of optical signals into an electrical signal, and obtain a computing result of the first data and the second data. The optical detector may receive all optical signals in the third group of optical signals, that is, a detection area of the optical detector may be greater than or equal to an area of the third group of optical signals (the area of the third group of optical signals may be understood as an area of a light spot formed by the third group of optical signals). According to the optical computing apparatus, the optical detector is disposed, so that it is convenient to obtain the computing result of the first data and the second data.

In a possible implementation, in addition to directly receiving the first group of optical signals, the optical computing apparatus may further receive an electrical signal, for example, an electrical signal indicating the first data. In this case, the optical computing apparatus may further include a signal source. The signal source may be located on a front focal plane of the first lens, and the signal source may output the first group optical signal based on the first data (an electrical signal indicating the first signal).

The signal source is added, so that the optical computing apparatus can be used in an electrical signal processing scenario, and an application scenario of the optical computing apparatus is expanded.

In a possible implementation, a distance between the phase plate and an amplitude modulator may be as small as possible. For example, the distance is less than a specified value, and the specified value is equal to one tenth of a focal length of the first lens or the second lens.

According to the optical computing apparatus, the distance between the phase plate and the amplitude modulator is small, which can reduce an optical signal loss and ensure that a final computing result is accurate.

Each group of intermediate optical signals includes M optical signals, and M is a positive integer greater than or equal to 3.

According to the optical computing apparatus, each group of intermediate optical signals includes at least three optical signals, and it is ensured that the group of intermediate optical signals can better indicate a signal obtained after the phase modulation and the amplitude modulation are performed on an optical signal in the second group of optical signals.

The phase plate includes a plurality of tuples, each tuple may include a plurality of phase units, each phase unit adjusts a phase of a received optical signal to a target value, and target values adjusted by different phase units are different. In other words, a phase of an optical signal obtained after the phase modulation is performed by each phase unit is fixed.

According to the optical computing apparatus, a structure of the phase plate is simple, and difficulty in constructing the optical computing apparatus can be further reduced.

The amplitude modulation array includes a plurality of groups of amplitude modulators, each group of amplitude modulators includes a plurality of amplitude modulators, and each amplitude modulator is configured to adjust an amplitude of a received optical signal based on the second data.

According to the optical computing apparatus, the amplitude modulation array includes the plurality of amplitude modulators, which facilitates the amplitude modulation on the optical signal.

In a possible implementation, the first lens and the second lens may be convex lenses, or may be lenses having a convex lens function. The first lens and the second lens may alternatively be a lens group having a convex lens function. According to the optical computing apparatus, there are many types of the first lens and the second lens, and construction manners of the optical computing apparatus are more flexible and diversified.

In a possible implementation, the lens having the convex lens function may be a reflex lens.

According to the optical computing apparatus, the reflex lens is applied to the optical computing apparatus, so that a propagation direction of an optical path in the optical computing apparatus can be changed, and a specific form of the optical computing apparatus can be expanded.

According to a second aspect, an embodiment of this application provides an optical computing system. The optical computing system includes a processor and the optical computing apparatus according to the first aspect and the possible implementations of the first aspect. The processor may be configured to provide second data for the optical computing apparatus, for example, provide an electrical signal loaded with the second data. Optionally, the processor may alternatively provide first data for the optical computing apparatus, for example, provide an electrical signal loaded with the first data. A specific form of the optical computing system is not limited in this embodiment of this application, and may be, for example, a card such as an accelerator card. The optical computing system may alternatively be applied to an imaging system, such as an intelligent camera. The intelligent camera is used as an example, and the optical computing system can receive a first group of optical signals used for imaging, and process the first group of optical signals.

According to a third aspect, an embodiment of this application provides an optical computing method. The optical computing method is applied to the optical computing apparatus according to the first aspect and the possible implementations of the first aspect. For beneficial effect, refer to the descriptions. Details are not described herein again. The method includes the following steps.

A first lens receives a first group of optical signals loaded with first data, and outputs a second group of optical signals based on the first group of optical signals.

A modulation unit may perform amplitude modulation and phase modulation on the second group of optical signals based on second data, and output a plurality of groups of intermediate optical signals, where each group of intermediate optical signals includes a plurality of optical signals, and the modulation unit is located on a back focal plane of the first lens.

A second lens outputs a third group of optical signals based on the plurality of groups of intermediate optical signals, where the third group of optical signals indicates a computing result of the first data and the second data.

In a possible implementation, a group of intermediate optical signals is output after the amplitude modulation and the phase modulation are performed on an optical signal in the second group of optical signals. The modulation unit includes a phase plate and an amplitude modulation array. When the phase plate is located before the amplitude modulation array, a phase plate may decompose the second group of optical signals into a plurality of groups of optical signals, where each group of optical signals includes a plurality of optical signals with different phases, and an optical signal in the second group of optical signals is decomposed into a group of optical signals by the phase plate.

An amplitude modulation array adjusts amplitudes of the plurality of groups of optical signals based on the second data, and outputs the plurality of groups of intermediate optical signals.

In a possible implementation, when the phase plate is located behind the amplitude modulation array, an amplitude modulation array may adjust an amplitude of the second group of optical signals based on the second data, and output a plurality of groups of optical signals, where each group of optical signals includes a plurality of optical signals, and an optical signal in the second group of optical signals outputs a group of optical signals by using the amplitude modulation array.

A phase plate in the modulation unit adjusts phases of the plurality of groups of optical signals, and outputs the plurality of groups of intermediate optical signals.

### BRIEF DESCRIPTION OF DRAWINGS

FIG. 1A is a schematic exploded view of a vector;
FIG. 1B is a schematic diagram of a structure of an optical 4F system;
FIG. 2 is a schematic diagram of a structure of an optical computing apparatus according to this application;
FIG. 3 is a schematic diagram of a structure of an optical computing apparatus according to this application;
FIG. 4 is a schematic diagram of a structure of an optical computing apparatus according to this application;
FIG. 5 is a schematic diagram of a structure of a modulation unit according to this application;
FIG. 6 is a schematic diagram of vectors before and after modulation in a complex plane according to this application;
FIG. 7 is a schematic diagram of a structure of a phase plate according to this application;
FIG. 8 is a schematic diagram of a structure of an amplitude modulation array according to this application;
FIG. 9 is a schematic diagram of a relative position of a phase plate and an amplitude modulation array according to this application;
FIG. 10 is a schematic diagram of a structure of a modulation unit according to this application;
FIG. 11 is a schematic diagram of a structure of an optical computing apparatus according to this application;
FIG. 12 is a schematic diagram of a structure of an optical computing apparatus according to this application;
FIG. 13 is a schematic diagram of a structure of an optical computing system according to this application; and
FIG. 14 is a schematic diagram of an optical computing method according to this application.

### DESCRIPTION OF EMBODIMENTS

Before an optical computing apparatus provided in embodiments of this application is described, concepts related to embodiments of this application are first described.

### (1) Complex number composition

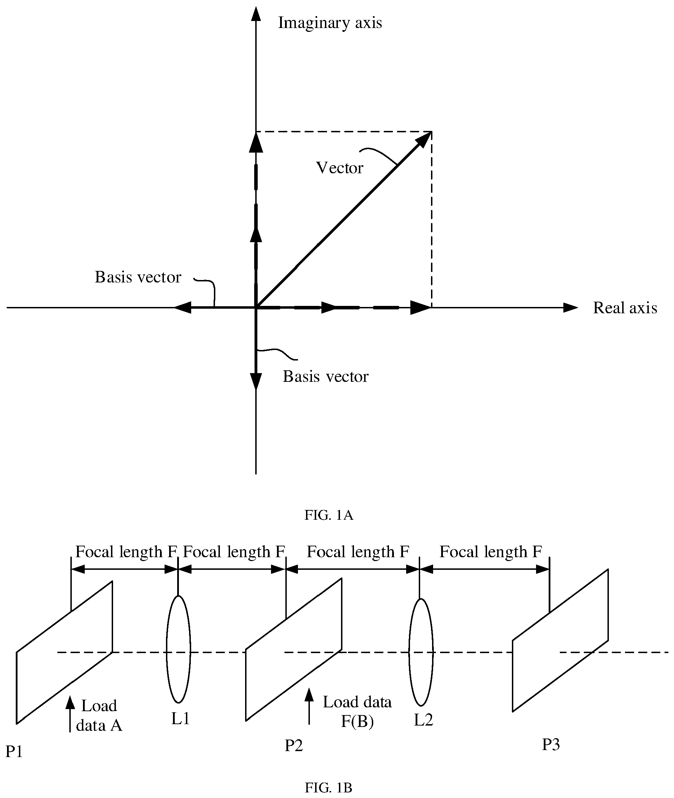

A complex plane is shown in FIG. 1A, where a horizontal axis is a real axis, and a vertical axis is an imaginary axis. Any vector (the vector may indicate a complex number) on the complex plane may be decomposed into components along directions of M basis vectors (which may also be referred to as basis vectors for short). FIG. 1A uses an example in which M is equal to 4, and the M basis vectors are respectively along positive directions and negative directions of the real axis and the imaginary axis. It should be noted that, in actual decomposition, a position and a direction of the basis vector may be flexibly set.

In other words, the M basis vectors may be composed into any vector on the complex plane by using the M basis vectors with a specific length.

### (2) Convolution and Fourier transform

Convolution operations of data A and data B may be expressed as: $A ⊗ B$

The convolution operations may be converted into an operation of Fourier transform in the following manner: $A ⊗ B = {F}^{- 1} \left\{F\left(A\right)⋅F\left(B\right)\right\}$

F indicates Fourier transform, and *F*⁻¹ indicates inverse Fourier transform.

When the convolution operation is implemented by using an optical 4F system shown in FIG. 1B, the data A may be loaded on an optical field on a plane P1, and then an optical field indicating the F(A) may be obtained on a plane P2 through the Fourier transform effect of a lens L1. The data F(B) is then modulated to an optical field on the plane P2. Then, an optical field indicating F(A) · F(B) is obtained on a plane P3 through the Fourier transform effect of a lens L2, a central symmetry operation is performed on an optical field of the plane P3, to obtain an optical field indicating F⁻¹{F(A) · F(B)}, and a computing result of the convolution operations may be obtained by using an optical detector.

When both the data A and the data B are vectors each including a plurality of elements, the convolution operations performed on the data A and the data B are a convolution operation between the vectors, and the data F(B) obtained after Fourier transform is performed on the data B is usually a complex vector (that is, F(B) is a vector including a plurality of complex numbers). In the optical 4F system, the data A may be loaded to a group of optical signals, one element of the data A is loaded to each optical signal of the group of optical signals, and a quantity of optical signals in the group of optical signals is the same as that of vector elements in the data A. The group of optical signals pass through the lens L1, and the optical field on the plane P2 is formed by a group of optical signals indicating F(A). Then, the data F(B) is modulated to the plane P2, and acts with the group of optical signals indicating F(A). Each optical signal of the group of optical signals that indicates F(A) is loaded with one complex number of the data F(B), to implement a multiplication operation of F(B) and F(A), and then, a group of optical signals indicating F⁻¹{F(A) · F(B)} may be obtained by using the lens L2 and a central symmetry operation.

When both the data A and the data B are matrices each including a plurality of elements, the convolution operations performed on the data A and the data B are a convolution operation between the matrices, and the data F(B) obtained after Fourier transform is performed on the data B is usually a complex matrix that includes a plurality of elements (each element may be a complex number). In the optical 4F system, the data A may be loaded to a group of optical signals, the group of optical signals includes a plurality of optical signals, a quantity of optical signals in the group of optical signals is the same as that of elements in the data A, and each optical signal is loaded with one element in the data A. The group of optical signals pass through the lens L1, and the optical field on the plane P2 is formed by a group of optical signals indicating F(A). Each optical signal in the group of optical signals may indicate data obtained after Fourier transform is performed on one element in the data A. Then, the data F(B) is modulated to the plane P2, and acts with the group of optical signals indicating F(A), to implement a multiplication operation of F(B) and F(A). Each optical signal of the group of optical signals indicating F(A) is loaded with one element in F(B), to implement the multiplication operation of F(B) and F(A). Then, a group of optical signals indicating F⁻¹{F(A) · F(B)} may be obtained by using the lens L2 and a central symmetry operation. The convolution operation between the matrices is essentially a convolution operation between elements in two matrices.

It can be learned from the foregoing descriptions that the process of processing a group of optical signals in a case in which the data A and the data B are the vectors is similar to the process of processing a group of optical signals in a case in which the data A and the data B are the matrices, and a difference lies in a quantity of optical signals in the group of optical signals. Details are not described herein again.

Because Fourier transform is a transform operation in a complex number domain, the data F(B) is usually a complex vector or a complex matrix. A complex number has the following conversion: $Amp ∗ {e}^{i ∗ pha} = a + i ∗ b$

On the left is an amplitude and phase expression of the complex number, and on the right is a real and imaginary part expression of the complex number. Amp is an amplitude value (also referred to as an amplitude) of the complex number, and pha is a phase (also referred to as an argument) of the complex number.

It can be learned that, in application of the field of optical computing, to modulate the data F(B) to a group of optical signals, a phase and an amplitude of each optical signal in the group of optical signals need to be modulated. Currently, a common manner is to embed an optical 4F system into the P2 plane of the optical 4F system to form an 8F system. In this way, the P2 plane is expanded into two planes in space, the phase modulation is implemented on one plane, and the amplitude modulation is implemented on the other plane.

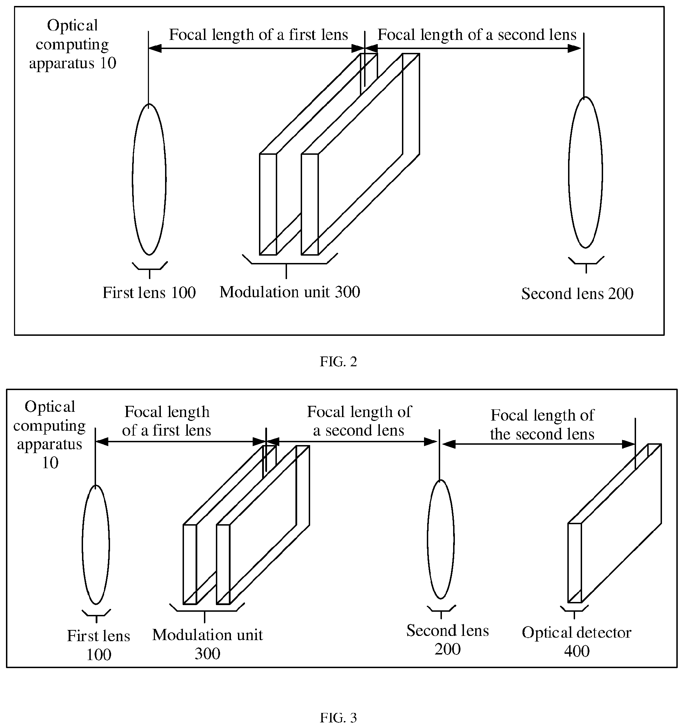

However, this increases a quantity of lenses in the optical system, and increases difficulty in and costs of constructing the optical system. To reduce the difficulty in and the costs of constructing the optical system, an embodiment of this application provides an optical computing apparatus. FIG. 2 shows an optical computing apparatus provided in this embodiment of this application. An optical computing apparatus 10 includes a first lens 100, a modulation unit 300, and a second lens 200. The first lens 100, the modulation unit 300, and the second lens 200 are sequentially disposed along an optical path.

The following uses an example in which a first group of optical signals are projected onto the optical computing apparatus 10 to describe a processing process of the first group of optical signals in the optical computing apparatus 10.

The first lens 100 may first receive a first group of optical signals A loaded with first data (for example, data A), where A = {a1, a2, ..., and aN}. Each optical signal ai (i is a positive integer not less than 1 and not greater than N) in the first group of optical signals is loaded with a part of the first data, for example, loaded with one element in a vector or a matrix. The first lens 100 processes the received first group of optical signals, and outputs a second group of optical signals B through Fourier transform effect of the first lens 100, where B = {b1, b2, ..., and bN}, and an optical signal bi (i is a positive integer not less than 1 and not greater than N) in the second group of optical signals is an optical signal obtained after Fourier transform is performed on an optical signal ai in the first group of optical signals.

The second group of optical signals continues to propagate to reach the modulation unit 300. The modulation unit 300 can perform phase modulation and amplitude modulation on any received optical signal. After receiving the second group of optical signals B, the modulation unit 300 may perform the phase modulation and the amplitude modulation on each optical signal in the second group of optical signals based on second data (for example, data B), and output a plurality of groups of intermediate optical signals C (C includes C1, C2, ..., and CN), where each group of intermediate optical signals Ci = {ci1, ci2, ..., and ciM}, and each group of intermediate optical signals Ci includes M optical signals.

The modulation unit 300 performs the phase modulation or the amplitude modulation on one optical signal in the second group of optical signals based on a part of the second data (for example, an element in a complex vector or a complex matrix). An optical signal bi in the second group of optical signals may be converted into a group of intermediate optical signals Ci after the phase modulation and the amplitude modulation. A quantity N of groups of the intermediate optical signals Ci is the same as a quantity N of optical signals bi in the second group of optical signals B. N is a positive integer not less than 3.

A sequence in which the modulation unit 300 performs the phase modulation and the amplitude modulation is not limited in this embodiment of this application. The phase modulation may be performed before the amplitude modulation, or the amplitude modulation may be performed before the phase modulation. It can be learned that, by using the modulation unit 300, each optical signal bi in the second group of optical signals B may be decomposed into M optical signals ci1, ci2, ..., and ciM with different amplitudes or phases. The M optical signals are a group of intermediate optical signals Ci, and M is a positive integer not less than 3.

The plurality of groups of intermediate optical signals C (C includes C1, C2, ..., and CN) continue to propagate to reach the second lens 200, and the second lens 200 processes the received plurality of groups of intermediate optical signals C (C includes C1, C2, ..., and CN), and outputs a third group of optical signals D. The second lens 200 has the Fourier transform effect and can perform Fourier transform on the plurality of groups of intermediate optical signals C (C includes C1, C2, ..., and CN) again, and outputs the third group of optical signals D.

A quantity of optical signals in the third group of optical signals D is described herein. Just after the plurality of groups of intermediate optical signals pass through the second lens 200, Fourier transform is performed once on each optical signal in each group of intermediate optical signals. Therefore, the quantity of optical signals in the third group of optical signals D, just after the plurality of groups of intermediate optical signals pass through the second lens 200, is equal to a total quantity of optical signals in the plurality of groups of intermediate optical signals. However, as the optical signals continue to propagate, when reaching a back focal plane of the second lens 200, the optical signals in the third group of optical signals encounter aggregation, and the quantity of optical signals in the third group of optical signals decreases. Therefore, the quantity of optical signals in the third group of optical signals D is not limited in this embodiment of this application.

It should be noted that the modulation unit 300 is located between the first lens 100 and the second lens 200. A distance between the first lens 100 and the second lens 200 is equal to a sum of a focal length of the first lens 100 and a focal length of the second lens 200. In this way, a back focal plane of the first lens 100 coincides with a front focal plane of the second lens 200. In this case, the modulation unit 300 is located on the back focal plane of the first lens 100 or the front focal plane of the second lens 200. In actual application, because the modulation unit 300 has a specific thickness, the modulation unit 300 is not strictly located on the back focal plane of the first lens 100 or the front focal plane of the second lens 200. Within an allowable distance deviation, it may be considered that the modulation unit 300 is located on the back focal plane of the first lens 100 and the front focal plane of the second lens 200.

It can be learned from the processing process of the first group of optical signals in the optical computing apparatus 10 that, in the optical computing apparatus 10 provided in this embodiment of this application, both the phase modulation and the amplitude modulation can be implemented by using the internally disposed modulation unit 300. No additional lens needs to be added. In the optical computing apparatus 10 that includes two lenses, it is easy to implement optical path alignment, so that difficulty in and costs of constructing the optical computing apparatus 10 are reduced. In addition, according to the optical computing apparatus provided in this embodiment of the present invention, the phase modulation and the amplitude modulation are performed on the optical signal on a spectral plane of the first lens, so that pixels of a phase plate and an amplitude modulator are aligned one by one, and this can improve resolution.

The following describes components that may be included in the optical computing apparatus 10.

### (1) First lens 100 and second lens 200

In the optical computing apparatus 10 provided in this embodiment of this application, the first lens 100 and the second lens 200 are lenses that can implement the Fourier transform effect. For example, the first lens 100 and the second lens 200 may be convex lenses. In a possible application scenario, the first lens 100 and the second lens 200 may alternatively be replaced with a lens group having the Fourier transform effect, or a reflex lens (that is, a lens having a convex lens function) having the Fourier transform effect. Lens materials of the first lens 100 and the second lens 200 are not limited in this embodiment of this application, and lenses such as a glass lens, a resin lens, and a liquid lens are all applicable to this embodiment of this application. Any lens or lens group that can implement Fourier transform is applicable to this embodiment of this application.

### (2) Optical detector 400

To determine a computing result, as shown in FIG. 3, the optical computing apparatus 10 in this embodiment of this application may further include the optical detector 400. A specific form of the optical detector 400 may be an optical detector array (including a plurality of detectors). The optical detector 400 is located on the back focal plane of the second lens 200, detects the third group of optical signals D, and determines a computing result of the second data and the first data.

The first group of optical signals is loaded with the first data, and the second data is loaded to the plurality of groups of intermediate optical signals C (C includes C1, C2, ..., and CN) by using the modulation unit 300. After passing through the second lens 200, the plurality of groups of intermediate optical signals C (C includes C1, C2, ..., and CN) become the third group of optical signals D. The third group of optical signals D indicates the computing result obtained after convolution operations are performed on the first data and the second data. The optical detector 400 may convert the third group of optical signals D into an electrical signal, so that the electrical signal can indicate the computing result obtained after the convolution operations are performed on the first data and the second data.

A type of the optical detector 400 is not limited in this embodiment of this application. Any optical detector 400 that can detect a group of optical signals is applicable to this embodiment of this application. For example, the optical detector 400 may be a photodiode (photodiode, PD) array, an avalanche photodiode (avalanche photodiode, APD) array, a charge coupled device (charge coupled device, CCD) camera, a complementary metal-oxide-semiconductor (complementary metal-oxide-semiconductor, CMOS) camera, a photoconductive detector array, a phototriode array, or the like.

### (3) Signal source 500

It can be seen from the foregoing descriptions that, the optical computing apparatus 10 can process a group of received optical signals, and in actual application, the optical computing apparatus 10 can also receive an electrical signal. In this case, the optical computing apparatus 10 can convert the received electrical signal into a group of optical signals for further processing.

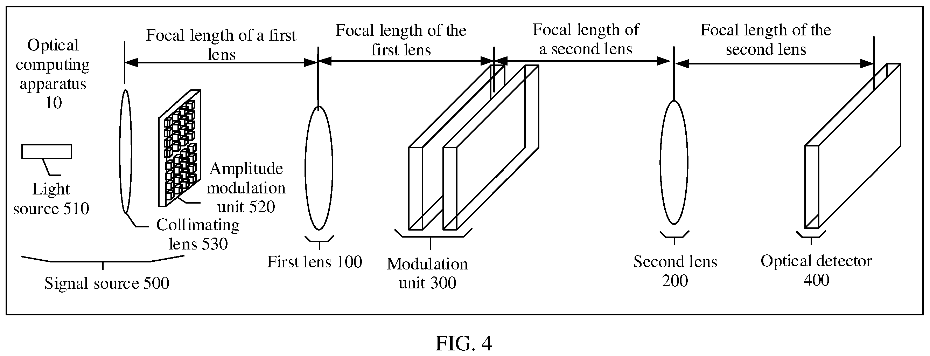

As shown in FIG. 4, an embodiment of this application further provides an optical computing apparatus. An optical computing apparatus 10 includes a signal source 500, a first lens 100, a modulation unit 300, and a second lens 200. Optionally, an optical detector 400 may further be included. For positions of disposing the first lens 100, the modulation unit 300, the second lens 200, and the optical detector 400, refer to the foregoing descriptions. Details are not described herein again.

The signal source 500 is located on a front focal plane of the first lens 100, and the signal source 500 can convert an electrical signal indicating first data into a first group of optical signals.

A specific structure of the signal source 500 is not limited in this embodiment of this application. Any module that can convert the electrical signal into the optical signal may be used as the signal source 500.

FIG. 4 shows only an example of a structure of the signal source 500. Refer to FIG. 4. The signal source 500 includes a light source 510 and an amplitude modulation unit 520. Optionally, a collimating lens 530 may be disposed between the light source 510 and the amplitude modulation unit 520.

The light source 510 may be a laser light source 510, such as a laser (for example, a space laser, a fiber laser, a semiconductor laser, or a vertical surface emitting laser), a laser diode, or the like. The light source 510 may emit a stable group of optical signals. The group of optical signals may include a plurality of optical signals. The plurality of optical signals may be coherent light. In some special scenarios, the plurality of optical signals may alternatively be incoherent light.

The collimating lens 530 can expand a horizontal area of the optical signal, so that the amplitude modulation unit 520 can perform amplitude modulation on the group of optical signals.

The amplitude modulation unit 520 may include a plurality of amplitude modulators. One amplitude modulator receives one optical signal, and performs the amplitude modulation on the optical signal based on the electrical signal. A type of the amplitude modulation unit 520 is not limited in this embodiment of this application. For example, the amplitude modulation unit 520 may be a spatial light modulator (spatial light modulator, SLM), a digital micromirror array (digital micromirror device, DMD), or an electro-absorption modulator array.

In this embodiment of this application, the amplitude modulation unit 520 can receive a group of optical signals E emitted by the light source 510, where E = {e1, e2, ..., and eN}; load the first data to the group of optical signals E; and output a first group of optical signals A.

The amplitude modulation unit 520 includes the plurality of amplitude modulators. The light source 510 may emit a group of optical signals E, where E = {e1, e2, ..., and eN}, and the group of optical signals E includes N same optical signals. When the group of optical signals E is transmitted to the amplitude modulation unit 520, each amplitude modulator may receive one optical signal ei of the plurality of optical signals, and perform the amplitude modulation on the optical signal ei based on an electrical signal input to the amplitude modulator (the electrical signal indicates data that needs to be loaded, and the loaded data may be an element in data A). The first group of optical signals A output by the amplitude modulation unit 520 is processed by the first lens 100, the modulation unit 300, and the second lens 200, to obtain a final computing result.

It should be noted that only one possible structure of the signal source 500 is enumerated as an example herein. In some scenarios, if the first data that needs to be loaded is a complex vector or a complex matrix, to modulate the first data to a group of optical signals, in the signal source 500, not only the amplitude of the optical signal needs to be modulated, but also a phase of the optical signal needs to be modulated. The amplitude modulation unit 520 may be replaced with a module that can implement both the phase modulation (for example, phase modulation is implemented by using a phase modulator array) and the amplitude modulation, to implement loading of the first data by using the module.

### (4) Modulation unit 300

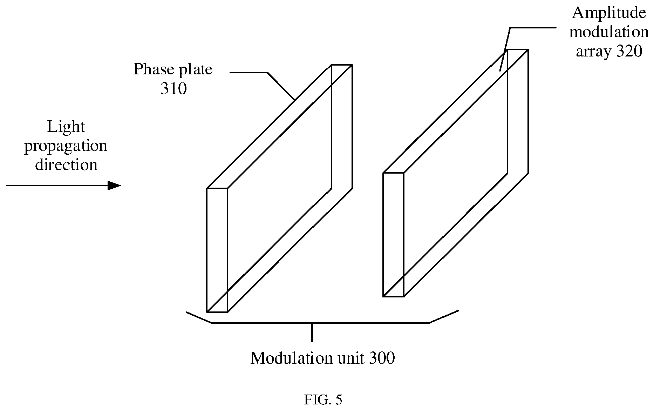

The following describes a structure of the modulation unit 300. In this embodiment of this application, the modulation unit 300 may have the following two structures:
In a first structure, as shown in FIG. 5, the modulation unit 300 includes a phase plate 310 and an amplitude modulation array 320. The phase plate 310 is located behind the first lens 100 and before the amplitude modulation array 320.

Inside the modulation unit 300, the phase plate 310 and the amplitude modulation array 320 may be as close as possible. For example, a distance between the phase plate 310 and the amplitude modulation array 320 may be less than a specified value. The specified value may be equal to one tenth of a focal length of the first lens 100, or may be equal to one tenth of a focal length of the second lens 200. For another example, the phase plate 310 and the amplitude modulation array 320 may be disposed close to each other, that is, adjacent to each other.

The phase plate 310 is located before the amplitude modulation array 320, and receives a second group of optical signals B output by the first lens 100. The phase plate 310 can decompose any optical signal bi in the second group of optical signals into M optical signals with different phases. The M optical signals with different phases are one group of optical signals Fi, and the second group of optical signals B may be converted into a plurality of groups of optical signals F (including F1, F2, ..., and FN) by using the phase plate 310. A quantity N of groups of the plurality of groups of optical signals is the same as a quantity N of optical signals bi in the second group of optical signals B.

Then, the plurality of groups of optical signals F (including F1, F2, ..., and FN) continue to propagate to reach the amplitude modulation array 320. The amplitude modulation array 320 may perform the amplitude modulation on the plurality of groups of optical signals based on second data, and output a plurality of groups of intermediate optical signals C (C includes C1, C2, ..., and CN).

A process in which the modulation unit 300 performs the amplitude modulation and the phase modulation on the second group of optical signals based on the second data is similar to a principle of complex number decomposition (or complex number composition).

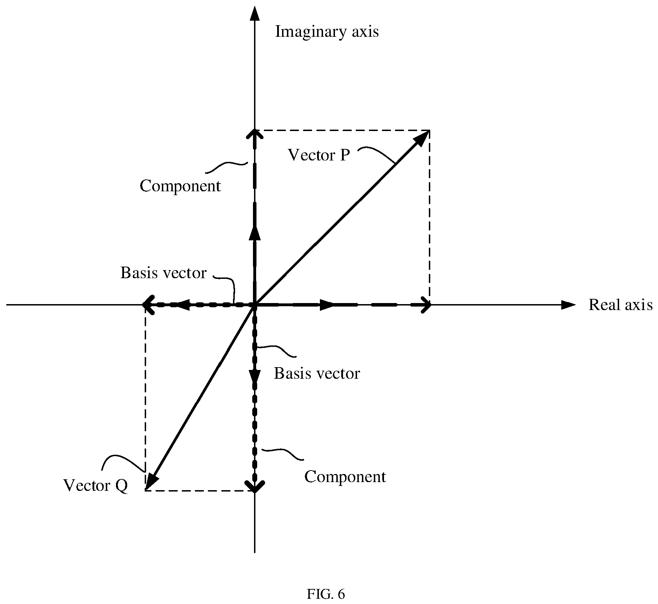

FIG. 6 is a schematic diagram of optical signals before and after modulation in a complex plane. A vector P indicates an optical signal P (which may be understood as an optical signal bi in the second group of optical signals B) before the modulation. A vector Q indicates an optical signal Q obtained after the phase modulation and the amplitude modulation.

Lengths of the vector P and the vector Q are different, that is, amplitudes of the optical signal P and the optical signal Q are different, and included angles between the vector P and a real axis and between the vector Q and the real axis are different, that is, phases of the optical signal P and the optical signal Q are different.

The optical signal P may be further decomposed, for example, may be decomposed into four components along four different directions. The four different directions indicate different arguments, and lengths of the four components indicate different amplitudes.

The optical signal Q may alternatively be further decomposed, for example, may be decomposed into four components along four different directions. The four different directions indicate different arguments, and lengths of the four components indicate different amplitudes.

For components of the optical signal P and the optical signal Q in a same direction, a difference lies in lengths of the components. In other words, the optical signal P may be first projected onto different directions, to obtain four components of the optical signal P in the different directions. Then, lengths of the four components of the optical signal P are changed, and the four components whose lengths are changed are composed into the optical signal Q. For example, M is 4. An optical signal bi in the second group of optical signals B may be decomposed into four optical signals {fi1, fi2, fi3, and fi4} with different phases by using the phase plate 310, that is, decomposed into a group of optical signals Fi. Then, the amplitude modulation array 320 performs the amplitude modulation on the four optical signals {fi1, fi2, fi3, and fi4} with the different phases in the group of optical signals Fi, and outputs four optical signals {di1, di2, di3, and di4}, that is, a group of intermediate optical signals Di.

In terms of mapping to the complex plane, this means that the phase plate 310 first changes an included angle between a vector T1 (indicating one optical signal bi of the second group of optical signals B) and the real axis, to form four vectors T2 (each vector T2 indicates one optical signal fil in the group of optical signals Fi, where l is a positive integer not less than 1 and not greater than M) whose included angles with the real axis are different and whose lengths are the same. Then, the amplitude modulation array 320 modulates the lengths of the four vectors T2 to implement the amplitude modulation, and generates four vectors T3. Each vector T3 may indicate one optical signal dil in a group of intermediate optical signals Di, and a group of intermediate optical signals Di formed by the four optical signals is an optical signal obtained after the phase modulation and the amplitude modulation are performed on an optical signal bi of the second group of optical signal B.

In the foregoing descriptions, M is used as an example. Based on a principle of vector decomposition, the directions of the components need to cover all directions of the complex plane as much as possible. In other words, it needs to be ensured that the components can be composed into any vector of the complex plane as much as possible. In actual application, M is set to a positive integer greater than 2.

### (1) Phase plate 310

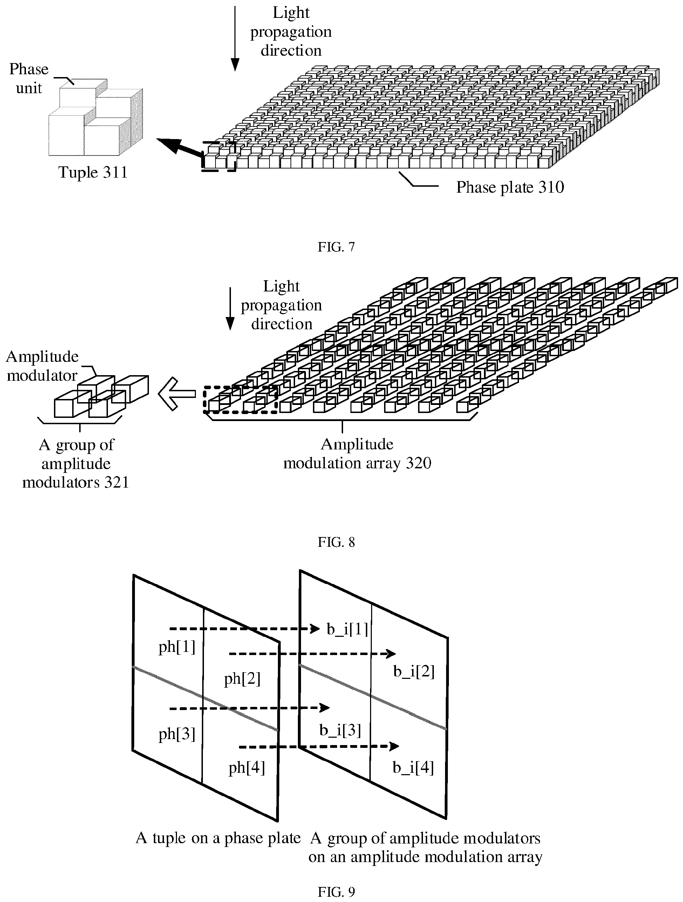

FIG. 7 shows a phase plate according to an embodiment of this application. A plurality of tuples 311 are disposed on the phase plate 310, and each tuple 311 includes M phase units. Each tuple 311 may receive an optical signal, and adjust a phase of the received optical signal. Therefore, the M phase units may decompose a received optical signal into M optical signals with different phases.

For one phase unit, each phase unit may adjust a phase of a received optical signal to a target value, and target values that can be adjusted by the phase units are different.

When an optical signal bi in the second group of optical signals B reaches the phase plate 310, the optical signal bi is projected onto a tuple 311 of the phase plate 310, that is, a horizontal area of the optical signal bi covers the tuple 311. Each phase unit of the tuple 311 may receive the optical signal bi. Each phase unit adjusts a phase of the received optical signal bi to the target value, and outputs an optical signal dil. The tuple 311 outputs a group of intermediate optical signals Di, where Di = {di1, di2, ..., and diM}.

The phase unit is different from a phase modulator. The phase modulator can flexibly change the phase of the optical signal based on loaded data. Different loaded data results in different phases of the optical signal obtained after the phase modulation. The phase unit can only adjust the phase to the target value.

The phase unit of this function is constructed in a simpler manner. For example, the M phase units may be transparent media with different thicknesses. A thickness direction is a propagation direction of the optical signal. A material of the transparent medium is not limited in this embodiment of this application. For example, the transparent medium may be silicon dioxide, glass, a silicon wafer, polyester resin, polymethyl methacrylate, lithium niobate, silicon nitride, borate, or indium tin oxide glass. Any material with a low light absorption rate is applicable to this embodiment of this application.

A principle of implementing the phase modulation by using transparent media with different thicknesses is briefly described herein: When an optical signal passes through a transparent medium with a thickness of d and a refractive index of n, a phase delay of n x d is accumulated for the optical signal. When two phase units whose transparent medium thicknesses are respectively d1 and d2 are constructed, after a same optical signal passes through the two phase units, an extra difference n(d1 - d2) is generated in phases of optical signals output by the two phase units. According to this principle, one optical signal can be decomposed into M optical signals with different phases. However, in actual application, the plurality of tuples 311 included in the phase plate 310 usually project a group of optical signals onto the modulation unit 300. Therefore, the phase modulation needs to be performed on each optical signal in the group of optical signals. One tuple 311 may perform the phase modulation on one optical signal in the group of optical signals.

It should be noted that quantities of phase units included in different tuples 311 and thicknesses of the phase units may be the same or different. In actual application, adjustment may be performed based on the second data that needs to be loaded.

### (2) Amplitude modulation array 320

FIG. 8 shows an amplitude modulation array according to an embodiment of this application. The amplitude modulation array 320 includes a plurality of groups of amplitude modulators 321, and each group of amplitude modulators 321 includes M amplitude modulators. Each group of amplitude modulators 321 may receive M optical signals output by the phase plate 310, and perform the amplitude modulation on the received M optical signals. One amplitude modulator in the group of amplitude modulators 321 may perform the amplitude modulation on one optical signal of the M optical signals.

When a plurality of groups of optical signals D (including D1, D2, ..., and DN) output by the phase plate 310 reach the amplitude modulation array 320, a group of intermediate optical signals Di is projected onto a group of amplitude modulators 321 on the amplitude modulation array 320, where Di = {di1, di2, ..., and diM}. A horizontal area of the group of intermediate optical signals Di covers the group of amplitude modulators 321.

One amplitude modulator of the group of amplitude modulators 321 may receive one optical signal dil (l is a positive integer not greater than 1 and not less than M) of a group of intermediate optical signals Di. Each amplitude modulator performs the amplitude modulation on the received optical signal di1, and outputs an optical signal cil. After performing the amplitude modulation on a group of intermediate optical signals Di, the group of amplitude modulators 321 outputs a group of intermediate optical signals Ci, where Ci = {ci1, ci2, ..., and ciM}.

However, in actual application, the plurality of groups of amplitude modulators 321 included in the amplitude modulation array 320 usually also project a group of optical signals onto the modulation unit 300. Therefore, the amplitude modulation needs to be performed on each optical signal in any group of optical signals. Each group of amplitude modulators 321 may perform the amplitude modulation on one optical signal in a group of optical signals. When the tuples 311 on the phase plate 310 and the groups of amplitude modulators 321 of the amplitude modulator array are disposed, a disposing manner in a one-to-one correspondence may be adopted. In other words, one tuple 311 on the phase plate 310 corresponds to one group of amplitude modulators 321 in the amplitude modulator array, and a group of optical signals output by the tuple 311 may be transmitted to the group of amplitude modulators 321. One phase unit in the tuple 311 corresponds to one amplitude modulator in the amplitude modulator array, and an optical signal output by the phase unit may be transmitted to the amplitude modulator in the group of amplitude modulators 321.

That M is equal to 4 is used as an example. FIG. 9 is a schematic diagram of positions in which one tuple 311 on the phase plate 310 and one group of amplitude modulators 321 on the amplitude modulation array 320 are disposed.

Phase offsets of four phase units in one tuple 311 on the phase plate 310 are respectively 0 degrees, 90 degrees, 180 degrees, and 270 degrees. The phase offset of a phase unit ph[1] is 0 degrees, that is, the phase unit ph[1] may adjust a phase of an optical signal to 0. The phase offset of a phase unit ph[2] is 90 degrees, that is, the phase unit ph[2] may adjust a phase of an optical signal to 90 degrees. The phase offset of a phase unit ph[3] is 180 degrees, that is, the phase unit ph[3] may adjust a phase of an optical signal to 180 degrees. The phase offset of a phase unit ph[4] is 270 degrees, that is, the phase unit ph[4] may adjust a phase of an optical signal to 270 degrees.

Four amplitude modulators in a group of amplitude modulators 321 on the amplitude modulation array 320 are disposed opposite to the four phase units, and the amplitude modulators and the phase units are in a one-to-one correspondence. An amplitude modulator can adjust an amplitude of an optical signal output by a corresponding phase unit. For example, an amplitude modulator b_i[1] is disposed opposite to the phase unit ph[1], and performs the amplitude modulation on an optical signal output by the phase unit ph[1]. An amplitude modulator b_i[2] is disposed opposite to the phase unit ph[2], and performs the amplitude modulation on an optical signal output by the phase unit ph[2]. An amplitude modulator b_i[3] is disposed opposite to the phase unit ph[3], and performs the amplitude modulation on an optical signal output by the phase unit ph[3]. An amplitude modulator b_i[4] is disposed opposite to the phase unit ph[4], and performs the amplitude modulation on an optical signal output by the phase unit ph[4]. For example, one element in the data F(B) is -1.5-2i. In this case, the amplitude modulation array 320 may modulate amplitudes of optical signals output by the two phase units ph[3] and ph[4] to 1.5 and 2 respectively, and modulate amplitudes of optical signals output by the two phase units ph[1] and ph[2] to 0. Values modulated on the amplitude modulator are (b_i[1], b_i[2], b_i[3], and b_i[4]) = (0, 0, 1.5, and 2) respectively.

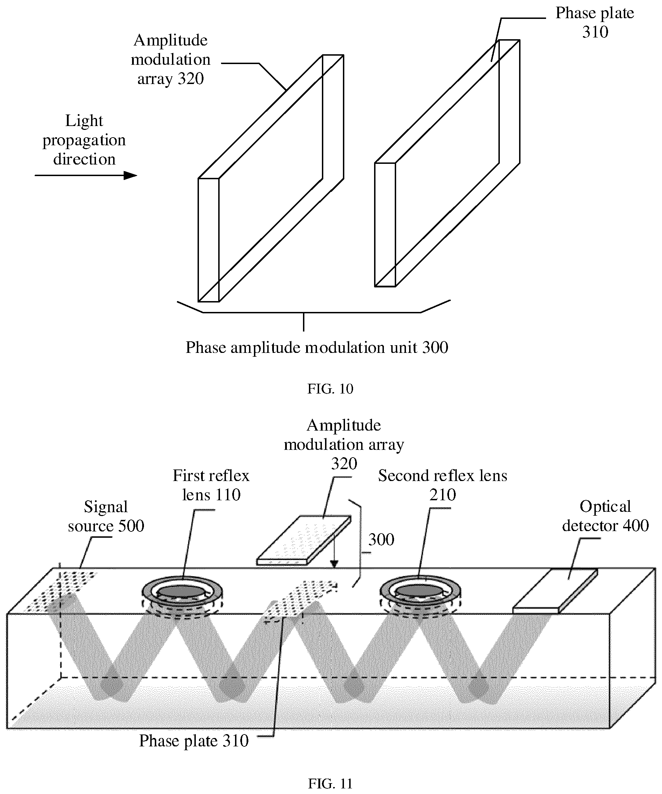

In a second structure, as shown in FIG. 10, the modulation unit 300 includes the phase plate 310 and the amplitude modulation array 320. The amplitude modulation array 320 is located behind the first lens 100 and before the phase plate 310.

Inside the modulation unit 300, a manner of disposing the phase plate 310 and the amplitude modulation array 320 is similar to the manner of disposing the phase plate 310 and the amplitude modulation array 320 in the first type of modulation unit 300. A difference lies in that positions of the amplitude modulation array 320 and the phase plate 310 are exchanged.

The amplitude modulation array 320 is located before the phase plate 310, and receives the second group of optical signals B output by the first lens 100. The amplitude modulation array 320 can decompose any optical signal bi in the second group of optical signals into M optical signals with different amplitudes based on the second data. The M optical signals with different amplitudes form one group of optical signals Gi. In other words, the second group of optical signals may be converted into a plurality of groups of optical signals G (including G1, G2, ..., and GN) by using the amplitude modulation array 320. A quantity N of groups of the plurality of groups of optical signals is the same as the quantity N of optical signals bi in the second group of optical signals B.

Then, the plurality of groups of optical signals G (including G1, G2, ..., and GN) continue to propagate to reach the phase plate 310. The phase plate 310 may perform the phase modulation on the plurality of groups of optical signals based on the second data, and output a plurality of groups of intermediate optical signals C (C includes C1, C2, ..., and CN). When a group of optical signals Gi passes through the phase plate 310, a group of intermediate optical signals Ci is generated.

For principles of the amplitude modulation and the phase modulation performed by the amplitude modulation array 320 and the phase plate 310 on the second group of optical signals B based on the second data, refer to the foregoing descriptions. Details are not described herein again.

For example, M is 4. An optical signal bi in the second group of optical signals B may be decomposed into four optical signals {gi1, gi2, gi3, and gi4} with different amplitudes and a same phase by using the amplitude modulation array 320, that is, decomposed into a group of optical signals Gi. The phase plate 310 then performs the phase modulation on the four optical signals {gi1, gi2, gi3, and gi4} in the group of optical signals Gi, and outputs four optical signals {di1, di2, di3, and di4}, that is, a group of intermediate optical signals Di.

In terms of mapping to the complex plane, this means that the amplitude modulation array 320 first changes a length of the vector T1 (indicating one optical signal bi of the second group of optical signals B), to implement the amplitude modulation and form four vectors T4 (each vector T4 indicates one optical signal gil in the group of optical signals Gi, where l is a positive integer not less than 1 and not greater than M) whose lengths are different and whose included angles with the real axis are the same. The phase plate 310 then modulates the included angles of the four vectors T4 with the real axis to implement the phase modulation, and generates four vectors T3. Each vector T3 may indicate one optical signal dil in a group of intermediate optical signals Di, and a group of intermediate optical signals Di formed by the four optical signals is an optical signal obtained after the phase modulation and the amplitude modulation are performed on an optical signal bi of the second group of optical signal B.

For the structures and the relative positions of the phase plate 310 and the amplitude modulation array 320, refer to the foregoing description. Details are not described herein again. The second type of modulation unit 300 differs from the first type of modulation unit 300 in the front and back positions of the phase plate 310 and the amplitude modulation array 320, and specifically, the structures and the relative position of the phase plate 310 and the amplitude modulation array 320 are the same as those of the phase plate 310 and the amplitude modulation array 320 in the first type of modulation unit 300.

According to the optical computing apparatus provided in this embodiment of the present invention, the modulation unit including the phase plate and the amplitude modulator is used on a spectral plane of the first lens, so that the phase plate and the amplitude modulator can use a same resolution, and pixels of the phase plate and the amplitude modulator are aligned one by one. This can improve the resolution.

Based on the optical computing apparatus 10 shown in FIG. 2, in embodiments of this application, the optical path in the optical computing apparatus 10 may be further changed, to form different optical computing apparatuses 10, and two types of the different optical computing apparatuses 10 are enumerated below.

FIG. 11 shows an optical computing apparatus according to an embodiment of this application. An optical computing apparatus 10 includes a first reflex lens 110, the modulation unit 300, and a second reflex lens 210. Optionally, the signal source 500 and the optical detector 400 may further be included.

In FIG. 11, that the phase plate 310 in the modulation unit 300 is located before the amplitude modulation array 320 is merely used as an example. The first reflex lens 110, the modulation unit 300, the second reflex lens 210, the signal source 500, and the optical detector 400 are located in a first plane, and a reflection layer may be disposed on a second plane parallel to the first plane. An optical signal transmitted in the optical computing apparatus 10 may be reflected back and forth between the first plane and the second plane.

The following uses a first group of optical signals as an example to describe a processing process of the optical signal in the optical computing apparatus 10:
A first group of optical signals A loaded with first data (the first group of optical signals A may be sent by the signal source 500 or input from the outside of the optical computing apparatus 10) first enters the first reflex lens 110, and the first reflex lens 110 reflects the first group of optical signals A, to output a second group of optical signals B. The second group of optical signals B is projected onto the reflection layer, and is reflected to the modulation unit 300 through the reflection layer. Because the phase plate 310 in the modulation unit 300 is located before the amplitude modulation array 320, the second group of optical signals B first reach the phase plate 310. The phase plate 310 decomposes any optical signal bi of the second group of optical signals B into M optical signals {hi1, hi2, ..., and hiM} with different phases, to form a group of optical signals Hi. The second group of optical signals B passes through the phase plate 310 to generate a plurality of groups of optical signals H (H includes H1, H2, ..., and HN), and a quantity N of groups of the plurality of groups of optical signals is equal to the quantity N of optical signals bi in the second group of optical signals B. The plurality of groups of optical signals H (H includes H1, H2, ..., and HN) continue to propagate to reach the amplitude modulation array 320.

The amplitude modulation array 320 performs modulation on amplitudes of the plurality of groups of optical signals H (H includes H1, H2, ..., and HN) based on second data, and outputs a plurality of groups of optical signals J (J includes J1, J2, ..., and JN). A quantity N of groups of the plurality of groups of optical signals J (J includes J1, J2, ..., and JN) is the same as the quantity N of groups of the plurality of groups of optical signals H (H includes H1, H2, ..., and HN).

For any group of optical signals Ji, Ji = {ji1, ji2, ..., and jiM}. The amplitude modulation array 320 performs the amplitude modulation on M optical signals {ji1, ji2, ..., and jiM} in the group of optical signals Ji, and outputs the M optical signals {ji1, ji2, ..., and jiM} after the amplitude modulation. The M optical signals on which the amplitude modulation is performed are a group of optical signals Ji.

The plurality of groups of optical signals J (J includes J1, J2, ..., and JN) pass through the phase plate 310 again. The phase plate 310 performs phase modulation on each group of optical signals (J1, J2, ..., and JN) in the plurality of groups of optical signals J, and outputs a plurality of groups of intermediate optical signals C(C includes C1, C2, ..., and CN). A group of optical signals Ji is converted into a group of intermediate optical signals Ci by passing through the phase plate 310. The plurality of groups of optical signals J are converted into the plurality of groups of intermediate optical signals C by passing through the phase plate 310.

The plurality of groups of intermediate optical signals are projected onto the reflection layer, and are reflected to and projected onto the second reflex lens 210 through the reflection layer. The second reflex lens 210 reflects the plurality of groups of intermediate optical signals C (C includes C1, C2, ..., and CN), and outputs a third group of optical signals D. The third group of optical signals D is projected onto the reflection layer, and is reflected to and projected onto the optical detector 400 through the reflection layer. The optical detector 400 detects the third group of optical signals D, to obtain a computing result of the first data and the second data.

In the optical computing apparatus 10 shown in FIG. 11, the first reflex lens 110 and the second reflex lens 210 have Fourier transform effect, and can perform Fourier transform on a group of received optical signals. The first reflex lens 110 and the second reflex lens 210 may be binary reflex lenses.

The optical computing apparatus 10 shown in FIG. 11 may be applied to a three-dimensional chip. If the optical computing apparatus 10 includes the signal source 500, the amplitude modulation unit 520 in the signal source 500 may be disposed on the chip, and the light source 510 in the signal source 500 may be disposed outside the chip. The light source 510 outside the chip may transmit a group of optical signals to the optical computing apparatus 10, and the amplitude modulation unit 520 in the signal source 500 may modulate the optical signals, load the first data to the group of optical signals, and output the first group of optical signals A. The amplitude modulation unit 520 may be a spatial light modulator or a digital micromirror array.

For a structure of the phase plate 310, refer to the foregoing descriptions. Details are not described herein again. Different from the foregoing phase plate 310, in the optical computing apparatus 10 shown in FIG. 11, the optical signal passes through the phase plate 310 twice. Therefore, phase offsets corresponding to phase units in the phase plate 310 may be half of the phase offsets corresponding to the phase units in the phase plate 310 in the foregoing optical computing apparatus 10. When the optical computing apparatus 10 shown in FIG. 11 is designed, thicknesses of the phase units in the optical computing apparatus 10 shown in FIG. 11 may be reduced by half compared with the thicknesses of the phase units in the foregoing optical computing apparatus 10.

For types of the optical detector 400 and the amplitude modulation array 320, refer to the foregoing descriptions. Details are not described herein again.

In a possible application scenario, the optical computing apparatus 10 shown in FIG. 11 may be integrated on a chip. The chip may use silicon as a substrate, and a dielectric layer with a small light absorption rate is deposited on the substrate. The dielectric layer may be silicon dioxide. The first reflex lens 110, the modulation unit 300, the second reflex lens 210, the signal source 500, and the optical detector 400 are disposed on an upper surface of the dielectric layer. In this way, the substrate may serve as the reflection layer. The optical signal transmitted in the optical computing apparatus 10 may be reflected back and forth on upper and lower surfaces of the dielectric layer.

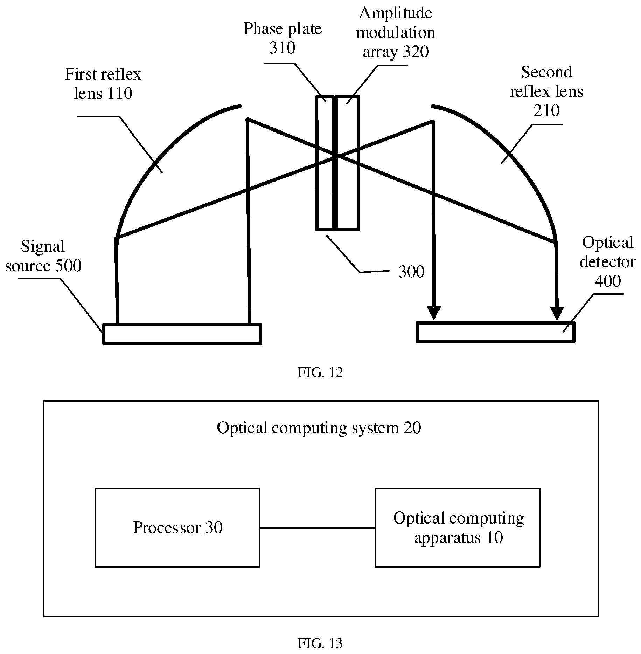

FIG. 12 shows still another optical computing apparatus according to an embodiment of this application. An optical computing apparatus 10 includes the first reflex lens 110, the modulation unit 300, and the second reflex lens 210. Optionally, the signal source 500 and the optical detector 400 may further be included. In FIG. 12, that the phase plate 310 in the modulation unit 300 is located before the amplitude modulation array 320 is merely used as an example. The following uses a first group of optical signals as an example to describe a processing process of the optical signal in the optical computing apparatus 10.

A first group of optical signals A loaded with first data (the first group of optical signals may be sent by the signal source 500 or input from the outside of the optical computing apparatus 10) first enters the first reflex lens 110, and the first reflex lens 110 reflects the first group of optical signals, to output a second group of optical signals B.

The second group of optical signals B is projected onto the modulation unit 300. The second group of optical signals B first reaches the phase plate 310, and the phase plate 310 decomposes the second group of optical signals B into a plurality of groups of optical signals F (including F1, F2, ..., and FN). The plurality of groups of optical signals continue to propagate to reach the amplitude modulation array 320. The amplitude modulation array 320 performs modulation on amplitudes of the plurality of groups of optical signals F (including F1, F2, ..., and FN) based on second data, and outputs a plurality of groups of intermediate optical signals C (C includes C1, C2, ..., and CN).

The plurality of groups of intermediate optical signals C (C includes C1, C2, ..., and CN) are projected onto the second reflex lens 210, and the second reflex lens 210 reflects the plurality of groups of intermediate optical signals C(C includes C1, C2, ..., and CN), and outputs a third group of optical signals D. The third group of optical signals D is projected onto the optical detector 400, and the optical detector 400 detects the third group of optical signals D, to obtain a computing result for computing the first data and the second data.

For structures of the modulation unit 300, the signal source 500, and the amplitude modulation unit 520, refer to the foregoing descriptions. Details are not described herein again.

In FIG. 12, reflective surfaces of the first reflex lens 110 and the second reflex lens 210 are arc surfaces, and Fourier transform effect is implemented by using arc surface reflection. To enhance reflection effect of the first reflex lens 110 and the second reflex lens 210, the first reflex lens 110 and the second reflex lens 210 may further be added with a reflection enhancing film or be coated with a thin metal film, such as a copper, silver, or gold thin film. The optical computing apparatus 10 shown in FIG. 12 may be applied to a two-dimensional chip, and normal directions of the reflective surfaces of the first reflex lens 110 and the second reflex lens 210 may be parallel to a plane on which the chip is located. When the optical computing apparatus 10 shown in FIG. 12 is applied to the two-dimensional chip, the optical computing apparatus 10 may be configured to implement a convolution operation between vectors.

FIG. 13 shows an optical computing system according to an embodiment of this application. An optical computing system 20 includes the optical computing apparatus 10 and a processor 30 provided in the foregoing embodiments. The optical computing apparatus 10 may be in a form of a chip. The processor 30 may provide second data for the optical computing apparatus 10. For another example, when the optical computing apparatus 10 includes the signal source 500, that is, when the optical computing apparatus 10 can receive an optical signal, the processor 30 may further provide first data, for example, an electrical signal indicating the first data, for the optical computing apparatus. The processor 30 may be a central processing unit (central processing unit, CPU), an application-specific integrated circuit (application-specific integrated circuit, ASIC), a field programmable gate array (field programmable gate array, FPGA), an artificial intelligence (artificial intelligence, AI) chip, a system on chip (system on chip, SoC) or a complex programmable logic device (complex programmable logic device, CPLD), a graphics processing unit (graphics processing unit, GPU), or the like.

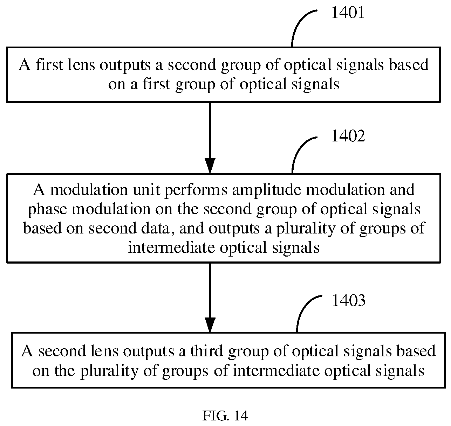

Based on a same inventive concept as the method embodiment, an embodiment of this application further provides an optical computing method, and the optical computing method may be applied to the optical computing apparatus provided in any one of the foregoing embodiments (the optical computing apparatus 10 shown in FIG. 2 to FIG. 4 and the optical computing apparatus 10 shown in FIG. 11 to FIG. 13). FIG. 14 shows an optical computing method according to an embodiment of this application, and the following steps are included in the method:
Step 1401: A first lens 100 receives a first group of optical signals loaded with first data, and outputs a second group of optical signals based on the first group of optical signals.

Step 1402: A modulation unit 300 may perform amplitude modulation and phase modulation on the second group of optical signals based on second data, and output a plurality of groups of intermediate optical signals, where each group of intermediate optical signals includes a plurality of optical signals, a group of intermediate optical signals is output after the amplitude modulation and the phase modulation are performed on an optical signal in the second group of optical signals, and the modulation unit 300 is located on a back focal plane of the first lens 100.

Step 1403: A second lens 200 outputs a third group of optical signals based on the plurality of groups of intermediate optical signals, where the third group of optical signals indicates a computing result of the first data and the second data.

The modulation unit 300 includes a phase plate 310 and an amplitude modulation array 320.

When the phase plate 310 is located before the amplitude modulation array 320,
the phase plate 310 may decompose the second group of optical signals into a plurality of groups of optical signals, where each group of optical signals includes a plurality of optical signals with different phases, and an optical signal in the second group of optical signals is decomposed into a group of optical signals by the phase plate 310. The amplitude modulation array 320 adjusts amplitudes of the plurality of groups of optical signals based on the second data, and outputs the plurality of groups of intermediate optical signals.

When the phase plate 310 is located behind the amplitude modulation array 320,
the amplitude modulation array 320 may adjust an amplitude of the second group of optical signals based on the second data, and output a plurality of groups of optical signals, where each group of optical signals includes a plurality of optical signals, and an optical signal in the second group of optical signals outputs a group of optical signals by using the amplitude modulation array 320.

The phase plate 310 in the modulation unit 300 adjusts phases of the plurality of groups of optical signals, and outputs the plurality of groups of intermediate optical signals.

## Claims

1. An optical computing apparatus (10), wherein the optical computing apparatus (10) comprises:
a first lens (100), configured to: receive a first group of optical signals loaded with first data, and output a second group of optical signals based on the first group of optical signals;
a modulation unit (300), located on a back focal plane of the first lens (100), and configured to: perform amplitude modulation and phase modulation on the second group of optical signals based on second data, and output a plurality of groups of intermediate optical signals, wherein each group of intermediate optical signals comprises a plurality of optical signals; and
a second lens (200), located behind the modulation unit (300), and configured to output a third group of optical signals based on the plurality of groups of intermediate optical signals, wherein the third group of optical signals indicates a computing result of the first data and the second data,
wherein a distance between the first lens (100) and the second lens (200) is equal to a sum of a focal length of the first lens (100) and a focal length of the second lens (200) so that the back focal plane of the first lens (100) coincides with a front focal plane of the second lens (200), and the modulation unit (300) is located on the back focal plane of the first lens (100) and thus the front focal plane of the second lens (200),
wherein the modulation unit (300) comprises a phase plate (310) and an amplitude modulation array (320) comprising a plurality of amplitude modulators (321), and
wherein
the amplitude modulation array (320) is located behind the phase plate (310) and the phase plate (310) is configured to: decompose the second group of optical signals into a plurality of groups of optical signals by adjusting a phase of each of at least three optical signals within the plurality of groups of optical signals to result in different phases, and the amplitude modulation array (320) comprising the plurality of amplitude modulators spatially corresponding to the at least three optical signals in the groups of optical signals is configured to: adjust amplitudes of each of the at least three optical signals within the groups of optical signals based on the second data,
or the phase plate (310) is located behind the amplitude modulation array (320) and the amplitude modulation array (320) comprising the plurality of amplitude modulators spatially corresponding to the at least three optical signals in the groups of optical signals is configured to: decompose the second group of optical signals into a plurality of groups of optical signals wherein each group comprises at least three optical signals with different amplitudes based on the second data, and the phase plate (310) is configured to: adjust phases of each of the at least three optical signals within the plurality of groups of optical signals.

2. The optical computing apparatus according to claim 1, wherein the amplitude modulation array (320) is located behind the phase plate (310).

3. The optical computing apparatus (10) according to claim 1, wherein the phase plate (310) is located behind the amplitude modulation array (320).

4. The optical computing apparatus (10) according to any one of claims 1 to 3, wherein the optical computing apparatus (10) further comprises an optical detector (400), and the optical detector (400) is located on a back focal plane of the second lens (200); and
the optical detector (400) is configured to: receive the third group of optical signals, and convert the third group of optical signals into an electrical signal.

5. The optical computing apparatus (10) according to any one of claims 1 to 4, wherein the optical computing apparatus (10) further comprises:
a signal source (500), located on a front focal plane of the first lens (100), and configured to output the first group of optical signals based on the first data.

6. The optical computing apparatus (10) according to any one of claims 1 to 5, wherein each group of intermediate optical signals comprises four optical signals.

7. The optical computing apparatus (10) according to any one of claims 1 to 6, wherein a distance between the phase plate (310) and one of the amplitude modulators (321) of the amplitude modulation array (320) is less than a specified value, and the specified value is equal to one tenth of a focal length of the first lens (100) or second lens (200).

8. The optical computing apparatus (10) according to any one of claims 1 to 7, wherein the phase plate (310) comprises a plurality of phase units, each phase unit is configured to adjust a phase of a received optical signal to a target value, and target values adjusted by different phase units are different.

9. The optical computing apparatus (10) according to any one of claims 1 to 8, wherein the first lens (100) and the second lens (200) are convex lenses, or lenses having a convex lens function.

10. The optical computing apparatus (10) according to claim 9, wherein the lenses having the convex lens function comprises reflex lenses.

11. The optical computing apparatus (10) according to claim 9, wherein lens materials of the first lens (100) and the second lens (200) are glass lenses, resin lenses, or liquid lenses.

12. An optical computing system (20), wherein the optical computing system comprises a processor (30) and the optical computing apparatus (10) according to any one of claims 1 to 11, and the processor (30) is configured to transmit the second data to the optical computing apparatus (10).

13. An optical computing method, wherein the method is applicable to an optical computing apparatus (10) that has a modulation unit (300) comprising a phase plate (310) and an amplitude modulation array (320) comprising a plurality of amplitude modulators, and the method comprises:
receiving, by a first lens (100) in the optical computing apparatus (10), a first group of optical signals loaded with first data, and outputting (1401) a second group of optical signals based on the first group of optical signals;
performing (1402), by the modulation unit (300) in the optical computing apparatus (10), amplitude and phase adjustment, based on second data, and outputting a plurality of groups of intermediate optical signals, wherein each group of intermediate optical signals comprises a plurality of optical signals, and the modulation unit (300) is located on a back focal plane of the first lens (100); and
outputting (1403), by a second lens (200) located behind the modulation unit (300) in the optical computing apparatus (10), a third group of optical signals based on the plurality of groups of intermediate optical signals, wherein the third group of optical signals indicates a computing result of the first data and the second data,
wherein a distance between the first lens (100) and the second lens (200) is equal to a sum of a focal length of the first lens (100) and a focal length of the second lens (200) so that the back focal plane of the first lens (100) coincides with a front focal plane of the second lens (200), and the modulation unit (300) is located on the back focal plane of the first lens (100) and thus the front focal plane of the second lens (200),
wherein
the amplitude modulation array (320) is located behind the phase plate (310) and the phase plate (310) decomposes the second group of optical signals into a plurality of groups of optical signals by adjusting a phase of each of at least three optical signals within the plurality of groups of optical signals to result in different phases, and the amplitude modulation array (320) comprising the plurality of amplitude modulators spatially corresponding to the plurality of optical signals in the groups of optical signals adjusts amplitudes of each of the at least three optical signals within the groups of optical signals based on the second data,
or
the phase plate (310) is located behind the amplitude modulation array (320) and the amplitude modulation array (320) comprising the plurality of amplitude modulators spatially corresponding to the at least three optical signals in the groups of optical signals decomposes the second group of optical signals into a plurality of groups of optical signals wherein each group comprises at least three optical signals with different amplitudes based on the second data, and the phase plate (310) adjusts phases of each of the at least three optical signals within the plurality of groups of optical signals.

14. The method according to claim 13, wherein the optical computing apparatus (10) further comprises an optical detector (400), and the optical detector (400) is located on a back focal plane of the second lens (200); and
the optical detector (400) receives the third group of optical signals, and converts the third group of optical signals into an electrical signal.

15. The method according to claim 13, wherein the optical computing apparatus (10) further comprises:
a signal source (500), located on a front focal plane of the first lens (100), the signal source (500) outputs the first group of optical signals based on the first data.

## Patentansprüche

1. Optische Recheneinrichtung (10), wobei die optische Recheneinrichtung (10) umfasst:
eine erste Linse (100), die konfiguriert ist zum: Empfangen einer ersten Gruppe von optischen Signalen, die mit ersten Daten geladen sind, und Ausgeben einer zweiten Gruppe von optischen Signalen basierend auf der ersten Gruppe von optischen Signalen;
eine Modulationseinheit (300), die sich auf einer hinteren Brennebene der ersten Linse (100) befindet und konfiguriert ist zum: Durchführen einer Amplitudenmodulation und Phasenmodulation an der zweiten Gruppe von optischen Signalen basierend auf zweiten Daten und Ausgeben einer Vielzahl von Gruppen von optischen Zwischensignalen, wobei jede Gruppe von optischen Zwischensignalen eine Vielzahl von optischen Signalen umfasst; und
eine zweite Linse (200), die sich hinter der Modulationseinheit (300) befindet und konfiguriert ist, um basierend auf der Vielzahl von Gruppen von optischen Zwischensignalen eine dritte Gruppe von optischen Signalen auszugeben, wobei die dritte Gruppe von optischen Signalen ein Berechnungsergebnis der ersten Daten und der zweiten Daten angibt,
wobei ein Abstand zwischen der ersten Linse (100) und der zweiten Linse (200) gleich einer Summe einer Brennweite der ersten Linse (100) und einer Brennweite der zweiten Linse (200) ist, sodass die hintere Brennebene der ersten Linse (100) mit einer vorderen Brennebene der zweiten Linse (200) zusammenfällt, und die Modulationseinheit (300) sich auf der hinteren Brennebene der ersten Linse (100) und somit der vorderen Brennebene der zweiten Linse (200) befindet,
wobei die Modulationseinheit (300) eine Phasenplatte (310) und ein Amplitudenmodulationsarray (320), das eine Vielzahl von Amplitudenmodulatoren (321) umfasst, umfasst, und
wobei
das Amplitudenmodulationsarray (320) sich hinter der Phasenplatte (310) befindet und die Phasenplatte (310) konfiguriert ist zum: Zerlegen der zweiten Gruppe von optischen Signalen in eine Vielzahl von Gruppen von optischen Signalen durch Anpassen einer Phase jedes von mindestens drei optischen Signalen innerhalb der Vielzahl von Gruppen von optischen Signalen, um unterschiedliche Phasen zu ergeben, und das Amplitudenmodulationsarray (320), das die Vielzahl von Amplitudenmodulatoren umfasst, die räumlich den mindestens drei optischen Signalen in den Gruppen von optischen Signalen entsprechen, konfiguriert ist zum: Anpassen von Amplituden jedes der mindestens drei optischen Signale innerhalb der Gruppen von optischen Signalen basierend auf den zweiten Daten,
oder die Phasenplatte (310) sich hinter dem Amplitudenmodulationsarray (320) befindet und das Amplitudenmodulationsarray (320), das die Vielzahl von Amplitudenmodulatoren umfasst, die räumlich den mindestens drei optischen Signalen in den Gruppen von optischen Signalen entsprechen, konfiguriert ist zum: Zerlegen der zweiten Gruppe von optischen Signalen in eine Vielzahl von Gruppen von optischen Signalen, wobei jede Gruppe basierend auf den zweiten Daten mindestens drei optische Signale mit unterschiedlichen Amplituden umfasst, und die Phasenplatte (310) konfiguriert ist zum: Anpassen von Phasen jedes der mindestens drei optischen Signale innerhalb der Vielzahl von Gruppen von optischen Signalen.

2. Optische Recheneinrichtung nach Anspruch 1, wobei das Amplitudenmodulationsarray (320) sich hinter der Phasenplatte (310) befindet.

3. Optische Recheneinrichtung (10) nach Anspruch 1, wobei die Phasenplatte (310) sich hinter dem Amplitudenmodulationsarray (320) befindet.

4. Optische Recheneinrichtung (10) nach einem der Ansprüche 1 bis 3, wobei die optische Recheneinrichtung (10) ferner einen optischen Detektor (400) umfasst, und der optische Detektor (400) sich auf einer hinteren Brennebene der zweiten Linse (200) befindet; und
der optische Detektor (400) konfiguriert ist zum: Empfangen der dritten Gruppe von optischen Signalen und Umwandeln der dritten Gruppe von optischen Signalen in ein elektrisches Signal.

5. Optische Recheneinrichtung (10) nach einem der Ansprüche 1 bis 4, wobei die optische Recheneinrichtung (10) ferner umfasst:
eine Signalquelle (500), die sich auf einer vorderen Brennebene der ersten Linse (100) befindet und konfiguriert ist, um die erste Gruppe von optischen Signalen basierend auf den ersten Daten auszugeben.

6. Optische Recheneinrichtung (10) nach einem der Ansprüche 1 bis 5, wobei jede Gruppe von optischen Zwischensignalen vier optische Signale umfasst.

7. Optische Recheneinrichtung (10) nach einem der Ansprüche 1 bis 6, wobei ein Abstand zwischen der Phasenplatte (310) und einem der Amplitudenmodulatoren (321) des Amplitudenmodulationsarrays (320) kleiner als ein spezifizierter Wert ist, und der spezifizierte Wert gleich einem Zehntel einer Brennweite der ersten Linse (100) oder zweiten Linse (200) ist.

8. Optische Recheneinrichtung (10) nach einem der Ansprüche 1 bis 7, wobei die Phasenplatte (310) eine Vielzahl von Phaseneinheiten umfasst, wobei jede Phaseneinheit konfiguriert ist, um eine Phase eines empfangenen optischen Signals auf einen Zielwert anzupassen, und durch unterschiedliche Phaseneinheiten angepasste Zielwerte unterschiedlich sind.

9. Optische Recheneinrichtung (10) nach einem der Ansprüche 1 bis 8, wobei die erste Linse (100) und die zweite Linse (200) Konvexlinsen oder Linsen, die eine Konvexlinsenfunktion aufweisen, sind.

10. Optische Recheneinrichtung (10) nach Anspruch 9, wobei die Linsen, die eine Konvexlinsenfunktion aufweisen, Reflexlinsen umfassen.

11. Optische Recheneinrichtung (10) nach Anspruch 9, wobei Linsenmaterialien der ersten Linse (100) und der zweiten Linse (200) Glaslinsen, Harzlinsen oder Flüssiglinsen sind.

12. Optisches Rechensystem (20), wobei das optische Rechensystem einen Prozessor (30) und die optische Recheneinrichtung (10) nach einem der Ansprüche 1 bis 11 umfasst, und der Prozessor (30) konfiguriert ist, um die zweiten Daten an die optische Recheneinrichtung (10) zu übertragen.

13. Optisches Rechenverfahren, wobei das Verfahren auf eine optische Recheneinrichtung (10) anwendbar ist, die eine Modulationseinheit (300) aufweist, die eine Phasenplatte (310) und ein Amplitudenmodulationsarray (320) umfasst, das eine Vielzahl von Amplitudenmodulatoren umfasst, und das Verfahren umfasst:
Empfangen, durch eine erste Linse (100) in der optischen Recheneinrichtung (10), einer ersten Gruppe von optischen Signalen, die mit ersten Daten geladen sind, und Ausgeben (1401) einer zweiten Gruppe von optischen Signalen basierend auf der ersten Gruppe von optischen Signalen;
Durchführen (1402), durch die Modulationseinheit (300) in der optischen Recheneinrichtung (10), einer Amplituden- und Phasenanpassung basierend auf zweiten Daten, und Ausgeben einer Vielzahl von Gruppen von optischen Zwischensignalen, wobei jede Gruppe von optischen Zwischensignalen eine Vielzahl von optischen Signalen umfasst,
und die Modulationseinheit (300) sich auf einer hinteren Brennebene der ersten Linse (100) befindet; und
Ausgeben (1403), durch eine zweite Linse (200), die sich hinter der Modulationseinheit (300) in der optischen Recheneinrichtung (10) befindet, einer dritten Gruppe von optischen Signalen basierend auf der Vielzahl von Gruppen von optischen Zwischensignalen, wobei die dritte Gruppe von optischen Signalen ein Berechnungsergebnis der ersten Daten und der zweiten Daten angibt,
wobei ein Abstand zwischen der ersten Linse (100) und der zweiten Linse (200) gleich einer Summe einer Brennweite der ersten Linse (100) und einer Brennweite der zweiten Linse (200) ist, sodass die hintere Brennebene der ersten Linse (100) mit einer vorderen Brennebene der zweiten Linse (200) zusammenfällt, und die Modulationseinheit (300) sich auf der hinteren Brennebene der ersten Linse (100) und somit der vorderen Brennebene der zweiten Linse (200) befindet,
wobei
das Amplitudenmodulationsarray (320) sich hinter der Phasenplatte (310) befindet und die Phasenplatte (310) die zweite Gruppe von optischen Signalen in eine Vielzahl von Gruppen von optischen Signalen durch Anpassen einer Phase jedes von mindestens drei optischen Signalen innerhalb der Vielzahl von Gruppen von optischen Signalen zerlegt, um unterschiedliche Phasen zu ergeben, und das Amplitudenmodulationsarray (320), das die Vielzahl von Amplitudenmodulatoren umfasst, die räumlich der Vielzahl von optischen Signalen in den Gruppen von optischen Signalen entsprechen,
Amplituden jedes der mindestens drei optischen Signale innerhalb der Gruppen von optischen Signalen basierend auf den zweiten Daten anpasst,
oder
die Phasenplatte (310) sich hinter dem Amplitudenmodulationsarray (320) befindet, und das Amplitudenmodulationsarray (320), das die Vielzahl von Amplitudenmodulatoren umfasst, die räumlich den mindestens drei optischen Signalen in den Gruppen von optischen Signalen entsprechen, die zweite Gruppe von optischen Signalen in eine Vielzahl von Gruppen von optischen Signalen zerlegt, wobei jede Gruppe mindestens drei optische Signale mit unterschiedlichen Amplituden basierend auf den zweiten Daten umfasst, und die Phasenplatte (310) passt Phasen jedes der mindestens drei optischen Signale innerhalb der Vielzahl von Gruppen von optischen Signalen anpasst.

14. Verfahren nach Anspruch 13, wobei die optische Recheneinrichtung (10) ferner einen optischen Detektor (400) umfasst und sich der optische Detektor (400) auf einer hinteren Brennebene der zweiten Linse (200) befindet; und
der optische Detektor (400) die dritte Gruppe von optischen Signalen empfängt und die dritte Gruppe von optischen Signalen in ein elektrisches Signal umwandelt.

15. Verfahren nach Anspruch 13, wobei die optische Recheneinrichtung (10) ferner umfasst:
eine Signalquelle (500), die sich auf einer vorderen Brennebene der ersten Linse (100) befindet, wobei die Signalquelle (500) die erste Gruppe von optischen Signalen basierend auf den ersten Daten ausgibt.

## Revendications

1. Appareil de calcul optique (10), dans lequel l'appareil de calcul optique (10) comprend :
un première lentille (100), configurée pour : recevoir un premier groupe de signaux optiques chargés de premières données, et émettre un deuxième groupe de signaux optiques sur la base du premier groupe de signaux optiques ;
une unité de modulation (300), située sur un plan focal arrière de la première lentille (100), et configurée pour : réaliser une modulation d'amplitude et une modulation de phase sur le deuxième groupe de signaux optiques sur la base de secondes données, et émettre une pluralité de groupes de signaux optiques intermédiaires, dans lequel chaque groupe de signaux optiques intermédiaires comprend une pluralité de signaux optiques ; et
une seconde lentille (200), située derrière l'unité de modulation (300), et configurée pour émettre un troisième groupe de signaux optiques sur la base de la pluralité de groupes de signaux optiques intermédiaires, dans lequel le troisième groupe de signaux optiques indique un résultat de calcul des premières données et des secondes données,
dans lequel une distance entre la première lentille (100) et la seconde lentille (200) est égale à une somme d'une longueur focale de la première lentille (100) et d'une longueur focale de la seconde lentille (200) de sorte que le plan focal arrière de la première lentille (100) coïncide avec un plan focal avant de la seconde lentille (200), et l'unité de modulation (300) est située sur le plan focal arrière de la première lentille (100) et donc sur le plan focal avant de la seconde lentille (200),
dans lequel l'unité de modulation (300) comprend une plaque de phase (310) et un réseau de modulation d'amplitude (320) comprenant une pluralité de modulateurs d'amplitude (321), et
dans lequel
le réseau de modulation d'amplitude (320) est situé derrière la plaque de phase (310) et la plaque de phase (310) est configurée pour : décomposer le deuxième groupe de signaux optiques en une pluralité de groupes de signaux optiques en ajustant une phase de chacun des au moins trois signaux optiques au sein de la pluralité de groupes de signaux optiques pour obtenir des phases différentes, et le réseau de modulation d'amplitude (320) comprenant la pluralité de modulateurs d'amplitude correspondant spatialement aux au moins trois signaux optiques dans les groupes de signaux optiques est configuré pour : ajuster des amplitudes de chacun des au moins trois signaux optiques au sein des groupes de signaux optiques sur la base des secondes données, ou la plaque de phase (310) est située derrière le réseau de modulation d'amplitude (320) et le réseau de modulation d'amplitude (320) comprenant la pluralité de modulateurs d'amplitude correspondant spatialement aux au moins trois signaux optiques dans les groupes de signaux optiques est configuré pour : décomposer le deuxième groupe de signaux optiques en une pluralité de groupes de signaux optiques, dans lequel chaque groupe comprend au moins trois signaux optiques d'amplitudes différentes sur la base des secondes données, et la plaque de phase (310) est configurée pour : ajuster des phases de chacun des au moins trois signaux optiques au sein de la pluralité de groupes de signaux optiques.

2. Appareil de calcul optique selon la revendication 1, dans lequel le réseau de modulation d'amplitude (320) est situé derrière la plaque de phase (310).

3. Appareil de calcul optique (10) selon la revendication 1, dans lequel la plaque de phase (310) est située derrière le réseau de modulation d'amplitude (320).

4. Appareil de calcul optique (10) selon l'une quelconque des revendications 1 à 3, dans lequel l'appareil de calcul optique (10) comprend en outre un détecteur optique (400), et le détecteur optique (400) est situé sur un plan focal arrière de la seconde lentille (200) ; et le détecteur optique (400) est configuré pour : recevoir le troisième groupe de signaux optiques, et convertir le troisième groupe de signaux optiques en un signal électrique.

5. Appareil de calcul optique (10) selon l'une quelconque des revendications 1 à 4, dans lequel l'appareil de calcul optique (10) comprend en outre :
une source de signal (500), située sur un plan focal avant de la première lentille (100), et configurée pour émettre le premier groupe de signaux optiques sur la base des premières données.

6. Appareil de calcul optique (10) selon l'une quelconque des revendications 1 à 5, dans lequel chaque groupe de signaux optiques intermédiaires comprend quatre signaux optiques.

7. Appareil de calcul optique (10) selon l'une quelconque des revendications 1 à 6, dans lequel une distance entre la plaque de phase (310) et l'un des modulateurs d'amplitude (321) du réseau de modulation d'amplitude (320) est inférieure à une valeur spécifiée, et la valeur spécifiée est égale à un dixième d'une longueur focale de la première lentille (100) ou de la seconde lentille (200).

8. Appareil de calcul optique (10) selon l'une quelconque des revendications 1 à 7, dans lequel la plaque de phase (310) comprend une pluralité d'unités de phase, chaque unité de phase est configurée pour ajuster une phase d'un signal optique reçu sur une valeur cible, et des valeurs cibles ajustées par différentes unités de phase sont différentes.

9. Appareil de calcul optique (10) selon l'une quelconque des revendications 1 à 8, dans lequel la première lentille (100) et la seconde lentille (200) sont des lentilles convexes, ou des lentilles ayant une fonction de lentille convexe.

10. Appareil de calcul optique (10) selon la revendication 9, dans lequel les lentilles ayant la fonction de lentille convexe comprennent des lentilles reflex.

11. Appareil de calcul optique (10) selon la revendication 9, dans lequel des matériaux de lentille de la première lentille (100) et de la seconde lentille (200) sont des lentilles en verre, des lentilles en résine ou des lentilles liquides.

12. Système de calcul optique (20), dans lequel le système de calcul optique comprend un processeur (30) et l'appareil de calcul optique (10) selon l'une quelconque des revendications 1 à 11, et le processeur (30) est configuré pour transmettre les secondes données à l'appareil de calcul optique (10).

13. Procédé de calcul optique, dans lequel le procédé est applicable à un appareil de calcul optique (10) qui a une unité de modulation (300) comprenant une plaque de phase (310) et un réseau de modulation d'amplitude (320) comprenant une pluralité de modulateurs d'amplitude, et le procédé comprend :
la réception, par une première lentille (100) dans l'appareil de calcul optique (10), d'un premier groupe de signaux optiques chargés de premières données, et
l'émission (1401) d'un deuxième groupe de signaux optiques sur la base du premier groupe de signaux optiques ;
la réalisation (1402), par l'unité de modulation (300) dans l'appareil de calcul optique (10), d'un ajustement d'amplitude et de phase, sur la base de secondes données, et l'émission d'une pluralité de groupes de signaux optiques intermédiaires, dans lequel chaque groupe de signaux optiques intermédiaires comprend une pluralité de signaux optiques,
et l'unité de modulation (300) est située sur un plan focal arrière de la première lentille (100) ; et
l'émission (1403), par une seconde lentille (200) située derrière l'unité de modulation (300) dans l'appareil de calcul optique (10), d'un troisième groupe de signaux optiques sur la base de la pluralité de groupes de signaux optiques intermédiaires, dans lequel le troisième groupe de signaux optiques indique un résultat de calcul des premières données et des secondes données,
dans lequel une distance entre la première lentille (100) et la seconde lentille (200) est égale à une somme d'une longueur focale de la première lentille (100) et d'une longueur focale de la seconde lentille (200) de sorte que le plan focal arrière de la première lentille (100) coïncide avec un plan focal avant de la seconde lentille (200), et l'unité de modulation (300) est située sur le plan focal arrière de la première lentille (100) et donc sur le plan focal avant de la seconde lentille (200),
dans lequel
le réseau de modulation d'amplitude (320) est situé derrière la plaque de phase (310) et la plaque de phase (310) décompose le deuxième groupe de signaux optiques en une pluralité de groupes de signaux optiques en ajustant une phase de chacun parmi au moins trois signaux optiques au sein de la pluralité de groupes de signaux optiques pour obtenir des phases différentes, et le réseau de modulation d'amplitude (320) comprenant la pluralité de modulateurs d'amplitude correspondant spatialement à la pluralité de signaux optiques dans les groupes de signaux optiques ajuste des amplitudes de chacun des au moins trois signaux optiques au sein des groupes de signaux optiques sur la base des secondes données,
ou
la plaque de phase (310) est située derrière le réseau de modulation d'amplitude (320) et le réseau de modulation d'amplitude (320) comprenant la pluralité de modulateurs d'amplitude correspondant spatialement aux au moins trois signaux optiques dans les groupes de signaux optiques décompose le deuxième groupe de signaux optiques en une pluralité de groupes de signaux optiques, dans lequel chaque groupe comprend au moins trois signaux optiques d'amplitudes différentes sur la base des secondes données, et la plaque de phase (310) ajuste des phases de chacun des au moins trois signaux optiques au sein de la pluralité de groupes de signaux optiques.

14. Procédé selon la revendication 13, dans lequel l'appareil de calcul optique (10) comprend en outre un détecteur optique (400), et le détecteur optique (400) est situé sur un plan focal arrière de la seconde lentille (200) ; et
le détecteur optique (400) reçoit le troisième groupe de signaux optiques, et convertit le troisième groupe de signaux optiques en un signal électrique.

15. Procédé selon la revendication 13, dans lequel l'appareil de calcul optique (10) comprend en outre :
une source de signal (500), située sur un plan focal avant de la première lentille (100), la source de signal (500) émet le premier groupe de signaux optiques sur la base des premières données.
